# EUROPEAN PATENT SPECIFICATION

(11) **EP 2 035 477 B1**
(45) Date of publication and mention of the grant of the patent: **08.06.2011**
(21) Application number: 07764912.7
(22) Date of filing: 28.06.2007
(51) Int. Cl.: C08G 63/48, C08G 63/20, C09D 167/08, C09D 5/03

(54) **POWDER COATINGS & USES THEREOF**
PULVERLACKE UND VERWENDUNGEN DAVON
REVÊTEMENTS PULVÉRULENTS ET UTILISATIONS DE CEUX-CI

(30) Priority: 30.06.2006 EP 06013596
(43) Date of publication of application: 18.03.2009
(73) Proprietor: DSM IP Assets B.V., 6411 TE Heerlen (NL)
(72) Inventor: URMANOVA, Antonia, NL-8014 LB Zwolle (NL); VAN DEN BERG JETHS, Robert, NL-7323 MB Apeldoorn (NL); BUIJSEN, Paulus, Franciscus, Anna, NL-3144 GD Maassluis (NL); SCHUTTE, Marcellinus, Hermanus, Johannes, NL-8101 DA Raalte (NL); BEETSMA, Jochum, NL-8022 RE Zwolle (NL)
(74) Representative: Heijman, Renske Harriët
(86) International application number: PCT/EP2007/005725
(87) International publication number: WO 2008/000470

(56) References cited:
- EP-A- 1 542 084
- WO-A-2004/058892
- US-A- 2 876 135
- US-A- 6 114 489
- US-A1- 2004 067 430
- US-A1- 2006 084 001

## Description

This invention relates to the use of a binder composition for improving the corrosion resistance of a coating. The binders of the present invention comprise branched, acid-functional polyester and crosslinker. The invention further relates to a branched polyester, a powder coating composition comprising the binder composition, substrates coated with the powder coating composition, and the cured coating.

US 2006/084001 A1 discloses a polyester resin for toner, wherein an acid component of the polyester comprises (1) disproportionated rosin and (2) terephthalic acid and/or isophthalic acid, an alcohol component of the polyester comprises (3) glycidyl ester of tertiary fatty acid and (4) an aliphathic diol containing from 2 to 10 carbon atoms, and a crosslinking component of the polyester comprises a polycarboxylic acid having three or more carboxyl groups and/or a polyol having three or more hydroxyl groups, with the molar ratio of the acid component (1) to the acid component (2), (1)/(2) being from 0.2 to 0.6 and the molar ratio of the alcohol component (3) to the alcohol component (4), (3)/(4), being from 0.05 to 0.4.

US 6114489 A discloses powder coating compositions containing reactive hyperbranched polymers, preferably hyperbranched polyesters having terminal hydroxyl, carboxy, epoxy, and Isocyanate groups.

US 2004/067430 A1 discloses a binder resin for a toner comprising a polyester component having a specific structure which is not soluble in tetrahydrofuran, and a polyester component having a specific branched structure which is soluble in tetrahydrofuran.

EP 1542084A1 discloses a binder resin for toner obtained using a catalyst containing titanium or germanium, preferably comprising the structure derived from branched or alicyclic alcohols, and comprising the structure derived from terephthalic acid as the acid component, which represents greater than or equal to 60 mol% with respect to the number of moles of all acid components, and a toner using the same.

US 2876135 discloses a coating composition comprising a solvent having dissolved therein from 60 percent to 80 percent by weight of the resinous components, of a short oil alkyd resin having an acid number of about 35 to 50, from 20 percent to 40 percent by weight of the resinous components, of a vinylresin which comprises a copolymer of a vinylhalide and a vinylester of a saturated aliphatic monocarboxylic acid, and from 5 percent to 15 percent by weight of the resinous components, of an amine-aldehyde resinous condensation product.

WO2004/058892 A1 discloses a polyester and alkyd polymer dispersion comprising polymers having backbone ester linkages, wherein at least a portion of the backbone ester linkages are formed from secondary and/or tertiary hydroxyl groups.

With the implementation of stricter volatile organic compound (VOC) regulations there is a growing need for coating compositions which give rise to low VOC such as powder coating compositions. However, current powder coating systems face drawbacks particularly when applied to metal substrates.

Pure epoxy powder systems are known for their protective properties and excellent chemical and corrosion resistance. Unfortunately they also suffer from a lack of weathering resistance and discoloration under UV light exposure. TGIC/polyester coatings are very popular because they have overall good performance even though their flexibility and corrosion resistance is less good than that of epoxy systems. However, TGIC is mutagenic and bisphenol-A epoxy is suspected to be carcinogenic. Therefore paint producers and consumers are searching for alternatives to replace these kinds of components in powder coatings.

One alternative, mainly used for outdoor applications, are the β-hydroxy-alkylamide (Primid®-like) systems. β-hydroxy-alkylamide systems have good weather resistance but suffer, in comparison with epoxy containing powder coatings, with regards corrosion and chemical resistance, degassing limit, blanching, humidity, and boiling water resistance. Due to their low degassing limit this coating usually cannot be applied in thick layer (greater than 100µm). Moreover, because of the lack of know cure catalysts, they do not allow for such good control over the curing speed by a given curing temperature (anti-dripping properties).

The reaction speed of the epoxy powder coatings can be controlled by varying the amount of cure catalyst. The most common catalysts are quaternary ammonium salts (QAS) and quaternary phosphonium salts (QPS). After the cure process is finished the cure catalyst remains in the coating. Unfortunately ionic water soluble compounds such as QAS and QPS can participate in electrochemical and ion exchange reactions in the humid environment. Therefore, their presence can enhance the processes that cause corrosion of the substrate and compromises the protective properties of the coating.

It is an object of the present invention to provide a binder, suitable for use in powder coating compositions, wherein the binder provides improved corrosion resistance to the coating.

A first embodiment of the invention provides a binder comprising crosslinker and branched, partially defunctionalized, acid-functional polyester based on:
a. At least one multi-functional component;
b. At least one di-functional component that is reactive towards a functional group on the multi-functional component; and
c. At least one mono-functional component;
wherein the polyester has a glass transition temperature of 40°C or greater. Preferably the mono-functional component comprises fatty acid. Preferably at least one of the components of the polyester comprises secondary or tertiary reactive groups.

A further embodiment of the invention comprises a branched, partially defunctionalized, acid-functional polyester based on:
a. At least one multi-functional component that is either carboxyl- functional, hydroxyl- functional or carboxyl- and hydroxyl- functional;
b. At least one di-functional component that is reactive towards a functional group on the multi-functional component; and
c. At least one fatty acid;
wherein the polyester has a glass transition temperature of 40°C or greater.

A further embodiment of the invention comprises branched, partially defunctionalized, acid-functional polyester based on:
a. At least one multi-functional component that is either carboxyl- functional, hydroxyl- functional or carboxyl- and hydroxyl- functional;
b. At least one di-functional component that is reactive towards a functional group on the multi-functional component; and
c. At least one mono-functional component;
wherein the polyester has a glass transition temperature of 40°C or greater and at least one of the components of the polyester comprises secondary or tertiary reactive groups.

Preferably at least 50 mol% of the acid-derived groups in the polyesters herein originate from an aromatic acid.

As used herein the term 'binder' refers to the combination of a resin with a separate crosslinker. With separate crosslinker is meant that the crosslinker is chemically distinct from the resin. It is within the scope of the invention to use more than one resin and/or more than one crosslinker in the binder. Preferably at least one crosslinker is reactive with acid functional polyesters. With multi-functional component is meant a component that has a functionality of three or higher.

When used in a powder coating the binders of the present invention have been found to provide a surprising improvement in corrosion resistance properties of said coating.

Surprisingly it was found that using fatty acid as mono-functional component is advantageous because it increases the hydrophobicity and the barrier properties of the coating. Other advantages include improved wetting and adhesion to the substrate due to the lower surface tension of the fatty acid modified polyester.

Surprisingly it was found out that the use of benzoic or substituted aromatic acid as part of the mono-functional component in the polyester can help prevent dripping when thicker films are needed without compromising the degassing limit when β-hydroxy-alkylamide is used as cross-linker. Substrates with thick coatings have better protection and barrier properties especially under severe conditions, such as, for example, in a marine environment. Combinations of fatty acid and benzoic acid as a mono-functional component can be used to obtain the excellent corrosion resistance at thicker layers.

A polyester is generally prepared by the reaction between an acid, or an acid derivative and an alcohol. This reaction is called esterification. To obtain a polyester-chain it is necessary to use at least di-functional starting components. The combination of a di-functional acid with a di-functional alcohol will lead to the formation of a linear polyester. Generally, when at least one of the components is multi-functional, a branched polyester will be obtained.

For the polyester according to the invention, it is necessary to use at least one multi-functional component, at least one di-functional component, and at least one mono-functional component. In certain embodiments the acid is chosen as the multi-functional component while in other embodiments the alcohol is chosen as the multi-functional component. The man skilled in the art will understand that it is also possible to use combinations of acids and alcohols. As used herein, combination can mean substances having different chemical natures and/or different functionalities. Thus it is possible to use, for example, a combination of two or more different acids or alcohols with the same functionality. However, it is also possible to combine at least one di-functional acid or alcohol with at least one multi-functional acid or alcohol.

The choice of the starting components can determine the properties of the polyester obtained. Examples of properties influenced by the choice of the starting components include mechanical properties (such as impact resistance), flexibility, outdoor durability, chemical resistance, boiling-water resistance, salt-spray resistance, glass transition temperature, and powder stability. Another important parameter in the esterification reaction is the ratio between the acid or acid-derivative and the alcohol. This ratio determines, amongst other things, the character of the polyester as being either acid-functional or hydroxyl-functional, the acid value, the molecular weight, and the functionality of the polyester.

As used herein, where an 'acid' is mentioned as component in the esterification reaction it will be understood that acid derivatives may also be used. With acid derivatives are meant these components that react in the esterification reaction in a comparable way as the acid would do. Examples of suitable acid derivatives include acid anhydride, acid chloride, or lower alkyl esters of the acids. With lower alkyl ester is meant a C₁-C₆ linear or branched alkyl ester. It is preferred to use either the acid or the acid anhydride.

In the preparation of the branched partially defunctionalized acid-functional polyester according to the invention preferably at least 50 mol% of the acid-derived groups originate from an aromatic acid. The rest of the acid-derived groups may originate from, for example, a linear or branched aliphatic acid or cyclo-aliphatic acid. It is preferred to have at least 75mol%, more preferably 85% and most preferably 95% of the acid-derived groups originating from an aromatic acid.

Examples of suitable di-functional aromatic acids for use herein include phthalic acid, isophthalic acid, naphthalene dicarboxylic acid, terephthalic acid, 3,6-dichlorophthalic acid, tetrachloro phthalic acid, and combinations thereof. Preferably isophthalic acid, terephthalic acid, their anhydrides, and combinations thereof.

The multi-functional component used for preparing the polyester according to the invention is either carboxyl- functional, hydroxyl- functional or carboxyl- and hydroxyl- functional. It is preferred to have one type of functional groups on the multi-functional component thus to have only either carboxyl-functional or hydroxyl-functional groups. Examples of suitable multi- functional aromatic acids include trimellitic acid, pyromellitic acid, their anhydrides, and combinations thereof.

Examples of suitable acids for use next to the aromatic acid include cyclohexane dicarboxylic acid (CHDA), tetrahydro phthalic acid, hexahydro phthalic acid, hexachloro-tetrahydro phthalic acid, azeleic acid, sebacic acid, decane dicarboxylic acid, hydroxy stearic acid, adipic acid, succinic acid and maleic acid, their anhydrides, and combinations thereof. Preferred are CHDA, hydroxy stearic acid, adipic acid, succinic acid, maleic acid, their anhydrides, and combinations thereof.

The alcohols that are used in the synthesis of the branched partially defunctionalized acid-functional polyester according to the invention are at least di-functional. The alcohols to be used in the polyester according to the invention can have a varying character, so, for example, aliphatic alcohols can be used but also aromatic or cyclo-aliphatic alcohols or combinations thereof. Both linear and branched alcohols can be used. Examples of suitable di-functional alcohols include ethylene glycol, 1,2-propanediol, 1,3-propanediol, 1,2-butanediol, 1,4-butanediol, 1,3-butanediol, 2,2-dimethyl-1,3-propanediol (= neopentyl glycol), 2,5-hexanediol, 1,6-hexandiol, 2,2-[bis-(4-hydroxy-cyclohexyl)]-propane, 1,4-dimethylol cyclohexane, diethylene glycol and dipropylene glycol, and combinations thereof. Examples of multi-functional alcohols include glycerol, hexanetriol, pentaerythritol, sorbitol, trimethylol ethane (TME), ditrimethylol propane, rimethylol propane (TMP), and combinations thereof. Preferred are glycerol, TME, TMP, and combinations thereof.

Depending on the embodiment the mono-functional component in the present polyester can both be an acid or acid derivative as defined above or an alcohol. Preferably it is an acid or acid derivative. Preferably the mono-functional component is selected from benzoic acid, substituted benzoic acids, cinnamic acid, aliphatically unsaturated substituted aromatic acid, fatty acids, and combinations thereof. Examples of suitable mono-functional aromatic acids include benzoic acid, tert.butyl benzoic acid, naphthalene carboxylic acid, and combinations thereof. Examples of mono-functional aliphatic acids include all linear and/or branched aliphatic monocarboxylic acids with 1-36 carbon atoms, for example fatty acids such as stearic acid, 2-ethylhexane carboxylic acid, versatic acid, lauric acid, and combinations thereof. Preferably the mono-functional aliphatic acid is saturated.

Examples of mono-functional alcohols include octanol, butanol, 2-ethyl-hexanol, isodecylalcohol, cyclohexanol, pentanol, hexanol, benzyl alcohol, and combinations thereof.

Preferably the mono-functional component is reactive towards a functional group on the multi-functional component.

The polyester obtained by reacting the required components in the required amounts, is an acid-functional polyester. With acid-functional polyester is here and hereinafter meant a polyester that has a substantially higher acid-value than hydroxyl-value. Preferably the acid-value is at least twice the hydroxyl-value. Preferably the hydroxyl-value is less than 25% of the acid value, more preferably the hydroxyl-value is less than 10% of the acid value. The acid value of the polyester according to the invention will generally lie between 5 and 300 mg KOH/ g resin, preferably between 15 and 250. It is clear that in all cases the hydroxyl value is lower than the acid value as else not an acid-functional polyester is obtained.

The amount of acid groups is determined by the titration of the acid/ anhydride groups by KOH. The amount of acid groups is expressed as the acid-value (AV) in mg KOH/g polyester. The amount of hydroxyl groups is determined by the titration of the hydroxyl groups with acetic anhydride and the back titration with KOH. The amount of hydroxyl groups is expressed as the hydroxyl-value (OH-value, OHV) in mg KOH used per g polyester.

The polyester according to the invention is preferably an amorphous polyester. With "amorphous" is meant that the polyester does not show a sharply defined melting on crystallization peak on a second DSC scan at a rate of 5°C/min. Generally, an amorphous polymer and/or polymer composition is characterized by a high degree of transparency (clarity) and a lack of a sharply defined melting point. Preferably the amount of crystallinity calculated from the DSC-measurement is less than 10%, preferably less than 5% and more preferably less than 1%.

The glass transition temperature (Tg) of the polyester according to the invention is 40°C or higher. Preferably the Tg is higher than 45°C or higher, more preferably the Tg is 50°C or higher. Generally, the higher the Tg the better the powder stability. Additionally a high Tg is advantageous because it leads to increased hardness of the final coating when using resins with higher Tg. The Tg may be measured by differential scanning calorimetry (DSC) at a scan rate of 5°C/min. The Tg can be varied by the choice and ratio of the separate components and can thus be tailored to the needs.

Surprisingly it has been found that using components having secondary and tertiary functional groups is advantageous. The secondary and the tertiary functional groups are less reactive compared to primary groups and thus more resistant to the main decomposition process of the polyesters - hydrolysis.

The current inventions show a surprising improvement when β-hydroxy-alkylamide is used as cross-linker. The epoxy containing powder coatings can also be improved when branched partially defunctionalized polyester according to the present invention is used.

It was found to be advantageous when the multi-functional component did not contain a tertiary carboxylic functionality. For the multi-functional component the same preferences hold as described for the polyester above.

The polyester according to the invention can advantageously be used in a binder comprising a crosslinker and this polyester. Such a binder has good combination flexibility and corrosion resistance properties.

In another preferred embodiment of the invention the mono-functional component is an aliphatic mono-carboxylic acid.

Polyesters used for powder coating for outdoor applications usually have a theoretical functionality (F) between 2 and 2.5. This is because the cross-linkers have a theoretical functionality higher than 2 (e.g. TGIC =3, Primid®=4). However, using polyesters with functionality higher than 2 can lead to a coating with poor gloss and appearance, reduced flow, bad DOI, and, when β-hydroxyalkylamide, is used a lower degassing limit. Usually improvement of the corrosion resistance (salt spray) can be achieved by increasing the cross-link density of the coating. But the increase of the functionality of the resin can lead to a certain disadvantages.

It has been found that using a branched partially defunctionalized, acid-functional polyester that is based on:
a. At least one multi-functional component that is either carboxyl- functional, hydroxyl- functional or carboxyl- and hydroxyl- functional;
b. At least one di-functional component that is reactive towards a functional group on the multi-functional component; and
c. At least one fatty acid as mono-functional component;
wherein the Tg is 40°C or greater improves the corrosion resistance properties of a powder coating. An additional advantage of this polyester is that it can reduce problems with the lower degassing limit and the higher reactivity of the branched resins during the introduction of additional cross-linking in the coating. It was found to be advantageous when the multi- functional component did not contain a tertiary carboxylic functionality.

Fatty acids are mono-, di-functional or mixtures of mono- and di-functional acids with at least 8 carbon atoms in the chain. Preferably the chain contains at least 12 carbon atoms. Preferably the aliphatic chain is 36 C-atoms or less. More preferably 30 C-atoms or less. A preferred range for the number of carbon atoms is 12-30. Examples of suitable mono-functional fatty acids include stearic acid, 2-ethylhexane acid, versatic acid, lauric acid, coconut fatty acid, palmitic fatty acid, myristic fatty acid, soy bean oil fatty acid, tallow oil fatty acid, and combinations thereof. Preferred are saturated fatty acids, more preferably stearic acid. Preferably the polyester comprises 15 wt% or less, more preferably 10 wt% or less, even more preferably 5 wt% of less, of fatty acid. Preferably the polyester comprises 0.01 wt% or more, more preferably 0.1 wt% or more, of fatty acid. As used herein, the term "fatty acid" includes fatty acid derivatives suitable for the use in the present polyesters.

The polyester according to this embodiment of the invention can advantageously be used in a binder comprising a cross-linker and the polyester. Powder coatings comprising this binder show some improvement in corrosion resistance.

In a further preferred embodiment the mono-functional component is chosen from benzoic acid and/or substituted benzoic acids. Here and hereinafter benzoic acid and substituted benzoic acid will together be referred to as "benzoic acid". It was found that the use of benzoic acid as part of the mono-functional component in the polyester can help prevent dripping when thicker films are needed without compromising the degassing limit when Primid® is used as cross-linker. Substrates with thick coatings have better protection and barrier properties especially under severe conditions, such as, for example, in a marine environment.

A suitable example for substituted benzoic acid is tertiary butyl benzoic acid.

The benzoic acid may be used alone or in combination with other components for the mono-functional component in the polyester synthesis. Preferably at least 50 mol% of the mono-functional component is made up by the benzoic acid, more preferably at least 75%, even more preferably 100%, of the mono-functional component is benzoic acid. The use of mono-functional acids may decrease the total functionality of the resin. It may, therefore, be necessary to add a certain amount of multi-functional component to compensate for the loss of functionality. With this compensation it is possible that the reactivity, the flexibility, the crosslink density and other protective properties of the total coating system will be compromised.

In a further embodiment of the invention the mono-functional component is chosen from cinnamic acid, aliphatically unsaturated substituted aromatic acid, and combinations thereof. Here and hereinafter cinnamic acid and aliphatically unsaturated substituted aromatic acid will together be referred to as "cinnamic acid".

It was found that the use of cinnamic acid as part of the mono-functional component in the polyester according to the invention resulted in improved adhesion of the coating to the substrate when the coating was derived from a binder comprising the polyester.

The cinnamic acid may be used alone or in combination with other components for the mono-functional component in the polyester synthesis. Preferably at least 50 mol% of the mono-functional component is made up by the cinnamic acid, more preferably at least 75%, even more preferably 100%, of the mono-functional component is cinnamic acid. An additional advantage of the use of cinnamic acid appeared to be that the acid acted as a built-in anti-oxidant. Therefore, thermosetting powder coatings obtained from a binder comprising the cinnamic acid have improved UV-resistance. In particular, the powder coatings comprising the present polyesters wherein cinnamic acid is the mono-functional component show improved UV-resistance.

The invention not only relates to the polyesters as described under the various embodiments, it also relates to binders comprising these polyesters and at least one crosslinker. Generally, the weight ratio polyester:crosslinker ranges between 50:50 and 98:2 and more preferably this ratio ranges between 75:25 and 97:3. The selection of the ratio is dependent on, for example, the selected crosslinker and the end application of the coating. Preferably the crosslinker is reactive with acid functional polyesters. Preferably the crosslinker is ß-hydroxyalkyl amide

The preparation of thermosetting powder coatings in general and the chemical reactions for curing powder coatings to form cured powder coatings are described by T. Misev in Powder Coatings, Chemistry and Technology (1991, John Wiley) on pp. 42-54, pp. 148 and 224-226. Test procedures are described at pages 284-300. A thermosetting powder coating binder composition is generally defined as the resinous part of the powder coating composition consisting of polymer and crosslinker and this composition generally contains more than 50 wt% polymer and less than 50 wt% crosslinker.

The invention also relates to powder coating compositions comprising the binder according to the various embodiments and at least one additive. Examples of additives include pigment, filler, degassing agent, flow agent and/or stabilizer. Suitable pigments include for example inorganic pigments, such as for example titanium dioxide, zinc sulphide, iron oxide and chromium oxide, and also organic pigments such as, for example, azo compounds. Suitable fillers include for example metal oxides, silicates, carbonates and sulphates. Primary and/or secondary antioxidants, UV stabilizers such as quinones, (sterically hindered) phenolic compounds, phosphonites, phosphites, thioethers, HALS compounds (hindered amine light stabilizers) and aromatic amines, may for example be used as stabilizers. Examples of degassing agents include benzoin and cyclohexane dimethanol bisbenzoate. Examples of flow agents include polyalkylacrylates, fluorohydrocarbons and silicone fluids. Other suitable additives include, for example, additives for improving tribocharging, such as sterically hindered tertiary amines that are described in EP-B-371528.

Powder coating compositions according to the invention can be applied to a suitable substrate in any suitable manner. For example, by electrostatically spraying the powder coating composition onto an earthed substrate and curing the composition to form a coating by exposing it to heat at a suitable temperature for a sufficient length of time. The applied powder can for example be heated in a gas oven, an electric oven or with the aid of infrared radiation or UV-radiation.

The invention further relates to a coating obtained after curing the powder coating composition. These coatings have very advantageous properties as described under the various embodiments. The powder coating compositions can be applied to all kinds of substrates. Examples of suitable substrates include metals, (galvanized) steel, cast iron, aluminium, other alloys, glass, ceramics, wood, bricks, and combinations thereof.

The invention also relates to a substrate fully or partially coated with a powder coating composition according to the invention.

### Examples

### Example A

1 mol trimethylol propane, 18.338 mol neopentyl glycol, 34.453 mol terephthalic acid, 14.812 mol ethylene glycol , and 0.01 mol butyl stannoic acid and 0.01 mol trisnonylphenyl phosphite were charged in 10 liter flask equipped with a stirrer, nitrogen sparge, a temperature control unit and distillation glassware. The mixture was heated slowly to 250°C, while the water was distilled off. When the water distillation stopped, the reaction mixture was cooled down to 220° and 1mol stearic acid was added. Then the reaction mixture was heated up to 235°C and vacuum of 50 mm Hg was applied. After 4 hours of vacuum at 235°C the obtained polyester was cooled down to 180°C, than the resin was discharged.

The composition and theoretically calculated values for molecular weight and functionality of the polyesters and the end specifications of Example 1 and 2 are given in Table 1.

**Table 1**

| | Example 1 | Example 2 |
|---|---|---|
| TMP, mol | 0.3 | 0.3 |
| NPG, mol | 14.3 | 13.9 |
| IPA mol | 1.7 | 1.7 |
| PTA, mol | 11.6 | 11.3 |
| BSA, mol | 0.01 | 0.01 |
| TNPP,mol | 0.01 | 0.01 |
| IPA , mol | 1.5 | 2.0 |
| AA, mol | 0.5 | * |
| SA, mol | 0.25 | 0.3 |
| Mw | 3610 | 3520 |
| F COOH | 1.8 | 1.8 |
| F total | 2.06 | 2.01 |
| AV th, mgKOH/g | 28 | 28 |
| OH th mg OKH/g | 4 | 4 |
| AV mgKOH/g | 28.7 | 29.3 |
| OH mgKOH/g | 2.8 | 3.3 |
| Viscosity, Pa.s | 35.4 | 41.4 |
| Tg, °C | 57.8 | 60 |

| | | |
|---|---|---|
| Abbreviations are used: NPG - neopentyl glycol IPA - isophthalic acid TMP - trimethylol propane PTA - purified terephthalic acid AA - adipic acid SA - stearic acid BSA - butyl stannoic acid TNPP -trisnonylphenyl phosphate AV - acid value, mg KOH/g Viscosity - measured at 160°C, Rheometrics CP 5 Tg - Glass transition temperature. AV th. - calculated acid value, mg KOH/g OH th - calculated hydroxyl value, mg KOH/g Mw - molecular weigth F COOH - acid functionality of the resin F total - the total functionality of the resin (FCOOH + FOH). | | |

Powder paint compositions (table 2) were prepared and coated onto substrates in the following manner:
a) The components of the powder paint were dry mixed in a blender and then homogenized in melt using PRISM TSE16 PC twin screw extruder at an extrusion temperature 120°C and a speed of 200rpm.
b) The extrudate was cooled and ground in an Alpine grinder. Subsequently, the powder was sieved to obtain a particle size of between 10 and 90µm.

The powders thus obtained are deposited by Corona spray gun onto cold rolled steel substrates R-46. The panels are cured in air-circulated oven for 8 minutes at 200°C.

**Table 2**

| | PP 1 | PP 2 |
|---|---|---|
| Example 1 | 288 | |
| Example 2 | | 288 |
| Primid XL552 | 12 | 12 |
| Kronos 2160 | 150 | 150 |
| Resiflow PV5 | 4.5 | 4.5 |
| Benzoin | 1.25 | 1.25 |

| | | |
|---|---|---|
| Primid XL552 - ß-hydroxyalkyl amide cross-linker trade mark of EMS. Kronos 2160 - TiO2 trade mark kronos titan GmbH Resiflow PV5 - flow agent trade mark Worlee-Chemie GmbH. Adhesion - measured following DIN 53151 Salt spray - measured following DIN 53167 | | |

The coatings showed excellent salt-spray resistance and good adhension.

## Claims

1. Binder suitable for use in a powder coating composition comprising a crosslinker and a branched, partially defunctionalized, acid-functional polyester based on:
a. at least one multi-functional component;
b. at least one di-functional component that is reactive towards a functional group on the multi-functional component; and
c. at least one mono-functional component;
wherein the polyester has a glass transition temperature of 40°C or greater, wherein the glass transition temperature is measured by differential scanning calorimetry (DSC) at a scan rate of 5°C/min,
wherein the mono-functional component comprises fatty acid.

2. Binder according to claim 1, wherein the polyester comprises 15wt% or less of fatty acid.

3. Binder according to claim 1 or claim 2, wherein the mono-functional component comprises a combination of fatty acid and benzoic add.

4. Binder according to any one of claims 1-3, wherein the glass transition temperature of the polyester is 50°C or greater.

5. Binder according to any one of claims 1-4, wherein at least one of the components of the polyester comprises secondary or tertiary functional groups.

6. Binder according to any one of claims 1-5, wherein at least 50mol% of the acid-derived groups in the polyester originate from an aromatic acid.

7. Binder according to any one of claims 1-6, wherein the crosslinker is β-hydroxy-alkylamide.

8. Powder coating composition comprising the binder according to any one of claims 1-7 and at least one additive.

9. Coating obtained after curing a powder coating composition according to claim 8.

10. Substrate fully or partly coated with a powder coating composition according to claim 8.

11. Use of a binder according to any one of claims 1-7 or a powder coating composition according to claim 8 for improving the corrosion resistance properties of a coating.

## Patentansprüche

1. Bindemittel, das zur Verwendung in einer Pulverlackzusammensetzung geeignet ist, umfassend einen Vernetzer und einen verzweigten teilweise defunktionalisierten, säurefunktionellen Polyester auf Basis von:
a. mindestens einer multifunktionellen Komponente;
b. mindestens einer difunktionellen Komponente, die gegenüber einer funktionellen Gruppe an der multifunktionellen Komponente reaktiv ist; und
c. mindestens einer monofunktionellen Komponente,
wobei der Polyester eine Glasübergangstemperatur von 40°C oder mehr aufweist, wobei die Messung der Glasübergangstemperatur durch Differentialkalorimetrie (Differential Scanning Calometry, DSC) mit einer Scanrate von 5°C/min erfolgt,
wobei die monofunktionelle Komponente Fettsäure umfaßt.

2. Bindemittel nach Anspruch 1, wober der Polyester 15 Gew.-% oder weniger Fettsäure umfaßt

3. Bindemittel nach Anspruch 1 oder Anspruch 2, wobei die monofunktionelle Komponente eine Kombination von Fettsäure und Benzoesäure umfaßt.

4. Bindemittel nach einem der Ansprüche 1-3, wobei die Glasübergangstemperatur des Polyesters 50°C oder mehr beträgt.

5. Bindemittel nach einem der Ansprüche 1-4, wobei mindestens eine der Komponenten des Polyesters sekundäre oder tertiäre funktionelle Gruppen umfaßt.

6. Bindemittel nach einem der Ansprüche 1-5, wobei mindestens 50mol% der von Säure abgeleiteten Gruppen in dem Polyester von einer aromatischen Säure stammen.

7. Bindemittel nach einem der Ansprüche 1-6, wobei es sich bei dem Vernetzer um β-Hydroxyalkylamid handelt.

8. Pulverlackzusammensetzung, umfassend das Bindemittel nach einem der Ansprüche 1-7 und mindestens ein Additiv.

9. Lack, erhalten nach Härten einer Pulverlackzusammensetzung nach Anspruch 8.

10. Substrat, das ganz oder teilweise mit einer Pulverlackzusammensetzung nach Anspruch 8 beschichtet ist.

11. Verwendung eines Bindemittels nach einem der Ansprüche 1-7 oder einer Pulverlackzusammensetzung nach Anspruch 8 zur Verbesserung der Korrosionsbeständigkeitseigenschaften eines Lacks.

## Revendications

1. Liant convenant pour une utilisation dans une composition de revêtement en poudre comprenant un agent de réticulation et un polyester à fonctionnalité acide ramifié partiellement défonctionnalisé basé sur:
a. au moins un composant multifonctionnel ;
b. au moins un composant bifonctionnel qui est réactif avec un groupe fonctionnel du composant multifonctionnel ; et
c. au moins un composant monofonctionnel ;
dans lequel le polyester a une température de transition vitreuse d'au moins 40 °C,
dans lequel la température de transition vitreuse est mesurée par calorimétrie différentielle à balayage (DSC) à une vitesse de balayage de 5 °C/min, et
dans lequel le composant monofonctionnel comprend un acide gras.

2. Liant selon la revendication 1, dans lequel le polyester comprend 15 % en poids ou moins d'acide gras.

3. Liant selon la revendication 1 ou la revendication 2, dans lequel le composant monofonctionnel comprend une combinaison d'acide gras et d'acide benzoïque.

4. Liant selon l'une quelconque des revendications 1 à 3, dans lequel la température de transition vitreuse du polyester est de 50 °C ou plus.

5. Liant selon l'une quelconque des revendications 1 à 4, dans lequel l'un au moins des composants du polyester comprend des groupes fonctionnels secondaires ou tertiaires.

6. Liant selon l'une quelconque des revendications 1 à 5, dans lequel au moins 50mol% des groupes dérivés d'acides dans le polyester proviennent d'un acide aromatique.

7. Liant selon l'une quelconque des revendications 1 à 6, dans lequel l'agent de réticulation est un β-hydroxyalkylamide.

8. Composition de revêtement en poudre comprenant le liant selon l'une quelconque des revendications 1 à 7 et au moins un additif.

9. Revêtement obtenu après durcissement d'une composition de revêtement en poudre selon la revendication 8.

10. Substrat entièrement ou partiellement revêtu d'une composition de revêtement en poudre selon la revendication 8.

11. Utilisation d'un liant selon l'une quelconque des revendications 1 à 7 ou d'une composition de revêtement en poudre selon la revendication 8 pour améliorer les propriétés de résistance à la corrosion d'un revêtement.
